# EUROPEAN PATENT SPECIFICATION

(11) **EP 3 085 672 B1**
(45) Date of publication and mention of the grant of the patent: **06.02.2019**
(21) Application number: 14872984.1
(22) Date of filing: 12.12.2014
(51) Int. Cl.: C03C 15/00, C03B 27/00, C03C 23/00

(54) **GLASS SHEET MANUFACTURING METHOD**
GLASSCHEIBENHERSTELLUNGSVERFAHREN
PROCÉDÉ DE FABRICATION DE FEUILLE DE VERRE

(30) Priority: 17.12.2013 JP 2013260572
(43) Date of publication of application: 26.10.2016
(73) Proprietor: Nippon Sheet Glass Company, Limited, Tokyo 108-6321 (JP)
(72) Inventor: TANAKA, Satoshi, Tokyo 108-6321 (JP); TSURI, Keiko, Tokyo 108-6321 (JP); KOYO, Hirotaka, Tokyo 108-6321 (JP); MITANI, Kazuishi, Tokyo 108-6321 (JP); SAITO, Yasuhiro, Tokyo 108-6321 (JP)
(74) Representative: Hart-Davis, Jason
(86) International application number: PCT/JP2014/006224
(87) International publication number: WO 2015/093029

(56) References cited:
- EP-A1- 2 371 776
- EP-A1- 3 053 888
- WO-A1-2012/141311
- WO-A1-2012/141311
- JP-A- H04 295 078
- JP-A- 2004 323 246
- JP-C2- 158 588
- US-A- 4 080 188
- US-A1- 2011 062 849

## Description

### TECHNICAL FIELD

The present invention relates to a method for producing a glass sheet having heat resistance enough to be applicable to glass sheets to be subjected to heat treatment.

### BACKGROUND ART

Conventionally, glass sheets are subjected to various surface treatments to obtain high transmittance glass sheets. As a method for obtaining a high transmittance glass sheet, formation of a low reflection film on the surface of a glass sheet so as to prevent a loss of light transmittance due to surface reflection and thus to increase the light transmittance has been proposed (see Patent Literature 1).

Patent Literature 2 has proposed formation of fine irregularities serving as a low refractive index layer on the surface of a glass sheet in addition to formation of a low reflection film (i.e., an anti-reflection film) thereon. Such a structure enhances the anti-reflection effect of the low reflection film. These fine irregularities can be formed by surface treatment of the glass sheet with a fluorinating agent (such as HF gas).

Patent Literature 3 discloses a glass sheet production method including the steps of (I) bringing a first acid gas into contact with at least one principal surface of a sheet-shaped glass material, the first acid gas containing hydrogen fluoride (HF) gas but not containing hydrogen chloride (HCl) gas and having a volume ratio of water vapor to HF gas of less than 8, the glass material containing at least sodium as a component and having a temperature in a range from a glass transition temperature to a temperature 250°C higher than the glass transition temperature; (II) before or after the step (I), bringing a second acid gas into contact with the principal surface of the sheet-shaped glass material, the second acid gas containing HCl gas and optionally containing HF gas, wherein when the second acid gas contains both HCl gas and HF gas, the second acid gas further contains water vapor with a volume ratio of water vapor to HF gas of 8 or more; and (III) cooling the sheet-shaped glass material having undergone both the step (I) and the step (II) so as to obtain a glass sheet.

Patent Literature 4 discloses glass substrate, of which at least one surface has multiple concave and convex portions, wherein the Rp representing the size of the convex portion is from 37 nm to 200 nm; a tilt angle p indicating a maximum frequency in the frequency distribution of a tilt angle, of the convex portion is from 20° to 75°; and in a case where, 50 indicates a value showing 50% of a cumulative frequency distribution of the tilt angle, an absolute value of a difference between p and 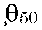 ( 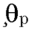 -θ₅₀) is 30° or less, and the concave and convex portion is such that a surface roughness (Ra) thereof is from 2 nm to 100 nm, a maximum height difference (P-V) thereof is from 35 nm to 400 nm, and an area ratio (S-ratio) thereof, as calculated by dividing an area containing the concave and convex portion by an inspection area, is from 1.1 to 3.0.

Patent Literature 5 discloses a method for producing flat glass comprising the following steps of melting a glass composition to form a glass melt, pouring the glass melt in a flat glass chamber for forming flat glass on a bath of molten tin or a molten tin alloy, or rolling the molten glass between forming rollers for forming flat glass, conveying the flat glass from the flat glass chamber or from the rollers into an annealing chamber for annealing the flat glass, wherein before or during or directly after said annealing the flat glass is etched on a surface, preferably the surface which was in contact with the molten tin or molten tin alloy, wherein by the etching a nanostructured surface is formed on the flat glass.

### CITATION LIST

### Patent Literature

Patent Literature 1: JP 2012-148950 A
Patent Literature 2: WO 2013/035746 A1
Patent Literature 3: EP-A-3053888
Patent Literature 4: WO-A-2012141311
Patent Literature 5: EP2371776

### SUMMARY OF INVENTION

### Technical Problem

A glass sheet coated with a thin film as proposed in Patent Literature 1 and Patent Literature 2 inevitably requires an additional step of forming the film on the glass sheet, which leads to an increase in cost, although some improvement in the transmittance can be expected. The peel resistance and durability of the thin film thus formed are also matters of concern.

In addition, the inventors' intensive studies have revealed that irregularities formed in the surface of a glass sheet by surface treatment with HF gas, as disclosed in Patent Literature 2, cannot maintain their own shape when the glass sheet is subjected to heat treatment at a thermal tempering temperature (about 650°C) for common soda-lime glass. This means that the properties such as a high transmittance provided by the irregularities can be significantly degraded by heat treatment.

It is therefore an object of the present disclosure to provide, without a significant increase in cost, a high transmittance glass sheet having improved heat resistance enough to withstand heat treatment applied to the glass sheet having been subjected to surface treatment for improving the transmittance without a significant decrease in the transmittance.

### Solution to Problem

As described above, the present inventors have found the problem that irregularities formed in the surface of a glass sheet, in particular, irregularities formed by surface treatment with HF gas, cannot maintain their own shape when the glass sheet is subjected to heat treatment. The present inventors have found another problem that in the case of a glass sheet having not only such irregularities but also pores formed in its surface region (surface layer) (i.e., in the case of a glass sheet having a porous structure in its surface region), the pores also cannot maintain their own shape when the glass sheet is subjected to heat treatment. The term "pore" is used herein to include: a pore having a closed inner space; a pore having an inner space with an opening communicating with an inner space of another pore; and a pore having an inner space with an opening communicating with the surface of a glass sheet (for example, a pore having a closed inner space in a cross section thereof but, in fact, having an opening communicating with the surface of a glass sheet). The present inventors have also revealed that not only the surface irregularities but also the pores provided in the surface layer contribute to improving the transmittance of the glass sheet. Hereinafter, a surface morphology including irregularities formed in the surface of a glass sheet and pores formed in the surface layer of the glass sheet is referred to as an irregularity pattern. When HF gas is brought into contact with a glass sheet to form an irregularity pattern in the surface of the glass sheet, if the temperature of the glass sheet is too high, it may be difficult to form the irregularity pattern due to a low viscosity of the glass. It is, of course, important to control the temperature of the glass sheet to form the irregularity pattern in the surface of the glass sheet. However, the problem that the present inventors have found here is not only the temperature control but also the problem that when the produced glass sheet (i.e., the glass sheet having an irregularity pattern in its surface) is reheated for heat treatment such as thermal tempering, the irregularity pattern formed in the glass sheet is deformed and thus the transmittance decreases. According to the present inventors, the cause of this problem is presumably as follows. The irregularity pattern formed by heat treatment with HF gas contains most of a large amount of silanol groups (≡ Si-OH) produced in the process of forming the pattern. Therefore, the glass transition temperature of the region of this irregularity pattern decreases, resulting in a significant decrease in the heat resistance. Intensive studies based on these findings have led the present inventors to provide a glass sheet having an irregularity pattern formed in its surface by surface treatment with HF gas and capable of maintaining this irregularity pattern during its production and even after heat treatment of the glass sheet thus produced.

### The subject-matter of the present invention is defined by the claims. Advantageous Effects of Invention

In the production method of the present invention, the gas contact step applies, to at least one principal surface of a glass sheet, both a treatment for obtaining a surface morphology that allows an increase in the transmittance and a treatment for increasing the heat resistance of the surface morphology. Therefore, according to the production method of the present invention, a high transmittance glass sheet having improved heat resistance can be produced in a simple way without a significant increase in cost. In addition, the glass sheet of the present disclosure has not only a high transmittance derived from an irregularity pattern formed in at least one principal surface thereof but also heat resistance high enough to maintain this high transmittance even after heat treatment. Thus, the glass sheet of the present disclosure is a high transmittance glass sheet having improved heat resistance.

### BRIEF DESCRIPTION OF DRAWINGS

FIG. 1 is a schematic diagram showing an example of a system capable of carrying out a glass sheet production method of the present invention.
FIG. 2 is a schematic diagram showing an apparatus used in Examples and Comparative Examples.
FIG. 3 is a graph showing the average values of transmittance gains of glass sheets of Examples and Comparative Examples before heat treatment.
FIG. 4 is a graph showing the average values of transmittance gains of glass sheets of Examples and Comparative Examples after heat treatment.

### DESCRIPTION OF EMBODIMENTS

### (First Embodiment)

An embodiment of the glass sheet production method of the present invention is described. The glass sheet production method of the present embodiment is a method for producing a surface-modified glass sheet, including a gas contact step of bringing hydrogen fluoride (HF) gas and hydrogen chloride (HCl) gas into contact with at least one principal surface of a glass sheet having a temperature in a range of 450°C to 630°C.

The glass sheet obtained by the production method of the present embodiment can have, in its surface, an irregularity pattern that allows an increase in the transmittance of 380- to 1100-nm wavelength light, for example, an irregularity pattern including irregularities with a depth of about 20 to 800 nm. The phrase "irregularities with a depth of about 20 to 800 nm" means that the distance in the thickness direction of the glass sheet between the maximum peak (i.e., the highest peak of the irregularities in the thickness direction of the principal surface of the glass sheet) and the maximum valley (i.e., the deepest valley of the irregularities in the thickness direction of the principal surface of the glass sheet) is in the range of about 20 to 800 nm. The same applies when the depth of the irregularities is mentioned in the following description. In terms of further increasing the transmittance, the depth of the irregularities is preferably 50 to 800 nm, and more preferably 100 to 400 nm.

The glass sheet having irregularities with a depth of about 20 to 800 nm in its surface can exhibit a high transmittance of 380- to 1100-nm wavelength light. The average value of transmittance gains for 380- to 1100-nm wavelength light can be increased to 0.5 or more or even 1.0 or more in the glass sheet obtained by the production method of the present embodiment. Here, the transmittance gains for 380- to 1100-nm wavelength light in the present embodiment are each a value obtained by subtracting a measured value of the transmittance of the glass sheet before the gas contact step from a measured value of the transmittance of the glass sheet after the gas contact step. The transmittance gain is usually calculated for every 1-nm wavelength interval. The average value of transmittance gains is a value obtained by determining the values of transmittance gains at the corresponding wavelengths in the wavelength range (the wavelength range of 380 to 1100 nm in the present embodiment) for which the average value is to be calculated, and then by performing simple averaging of the determined values.

A first example of the gas contact step is described.

A gas used in the first example of the gas contact step is a mixed gas containing both HF gas and HCl gas. That is, in the gas contact step, a mixed gas containing HF gas and HCl gas is brought into contact with at least one principal surface of a glass sheet. The mixed gas may be brought into contact with the surface of the glass sheet only once or at least two separate times.

The concentration of HF contained in the mixed gas is preferably 2 to 6 vol%, and more preferably 3 to 5 vol%. A substance that is converted into HF in the course of a reaction, that is, a substance from which HF is produced as a result of the reaction, also can be used as the HF contained in the mixed gas. If the concentration of HF in the mixed gas is too high, the depth of the irregularities of the irregularity pattern formed in the surface of the glass sheet may be too large beyond the above-mentioned range and thus the haze ratio may increase. As a result, sufficient transmittance gains may not be obtained due to light scattering. On the other hand, if the concentration of HF in the mixed gas is too low, the depth of the irregularities of the irregularity pattern formed in the surface of the glass sheet may fall below the above-mentioned range. As a result, sufficient transmittance gains may not be obtained.

The concentration of HCl contained in the mixed gas is preferably 0.1 to 15 vol%, more preferably 0.2 to 5 vol%, and even more preferably 0.25 vol% or more. If the concentration of the HCl gas is too high, the mixed gas may require careful handling or may damage a production facility. On the other hand, if the concentration of HCl in the mixed gas is too low, it may be difficult to improve the heat resistance. A substance that is converted into HCl in the course of a reaction, that is, a substance from which HCl is produced as a result of the reaction, also can be used as the HCl contained in the mixed gas.

The mixed gas may contain not only HF gas and HCl gas but also other gases. For example, the mixed gas may contain N₂ or the like as a diluent gas.

The present inventors believe that the reason why the contact of the surface of a glass sheet having a temperature in a range of 450°C to 630°C with the mixed gas mentioned above can change the surface morphology of the glass sheet as described above and enhance the heat resistance thereof is as follows.

When the mixed gas containing HF and HCl is brought into contact with the surface of a glass sheet having a temperature in a range of 450°C to 630°C, ion exchange occurs. As a result, the water vapor in the mixed gas and the moisture in the atmosphere in various forms, such as in the form of proton (H+), water (H₂O), and oxonium ion (H₃O⁺), easily enter the glass (for example, Reaction Formula (1) below).

≡Si-O⁻Na⁺ + H⁺ → ≡Si-OH + Na⁺ (1)

Furthermore, an etching reaction, in which HF gas in the mixed gas breaks Si-O bonds that are basic structures of the glass, occurs (Reaction Formula (2) below).

SiO₂ (glass) + 4HF → SiF₄+ 2H₂O (2)

In the reactions of Reaction Formulae (1) and (2), phenomena such as corrosion of glass and reprecipitation of glass occur in a complicated manner. Probably, because of these factors, the irregularity pattern that allows an increase in the transmittance is formed in the surface of the glass sheet.

It is believed that after the supply of the mixed gas is stopped, a dehydration condensation reaction in which the produced silanol groups are dehydrated and condensed occurs (Reaction Formula (3) below).

=Si-OH + HO-Si= → ≡Si-O-Si≡ + H₂O (3)

As the dehydration condensation reaction of a region having this irregularity pattern is promoted by the catalytic action of the HCl gas, formation of a rigid SiO₂ network proceeds. As a result, the heat resistance of the irregularity pattern is enhanced.

Next, a second example (which is not according to the present invention) of the gas contact step is described. In the second example, HF gas and HCl gas are brought into contact with the surface of a glass sheet separately. That is, the gas contact step includes a HF gas contact step and a HCl gas contact step. In the HF gas contact step, a first gas containing HF gas but not containing HCl gas is brought into contact with at least one principal surface of the glass sheet. In the HCl gas contact step, a second gas containing HCl but not containing HF gas is brought into contact with the at least one principal surface of the glass sheet. The order of the HF gas contact step and the HCl gas contact step is not particularly limited. The HCl gas contact step may be performed after the HF gas contact step, or the HF gas contact step may be performed after the HCl gas contact step. The number of operations in each of the HF gas contact step and the HCl gas contact step is also not particularly limited. Therefore, for example, the HF gas contact step, the HCl gas contact step, and the HCl gas contact step may be performed in this order.

The contact of the surface of the glass sheet with the first gas can change the surface morphology of the glass sheet. This mechanism is probably the same as that in the first example. More specifically, by the reactions in Reaction Formulae (1) and (2) and phenomena such as corrosion of glass and reprecipitation of glass that occur in a complicated manner in these reactions, the above-mentioned irregularities are formed in the surface of the glass sheet and thus the glass sheet can exhibit a high transmittance.

The concentration of HF contained in the first gas is preferably 2 to 6 vol%, and more preferably 3 to 5 vol%. A substance that is converted into HF in the course of a reaction, that is, a substance from which HF is produced as a result of the reaction, also can be used as the HF contained in the first gas. If the concentration of HF in the first gas is too high, the depth of the irregularities of the irregularity pattern formed in the surface of the glass sheet may be too large beyond the above-mentioned range and thus the haze ratio may increase. As a result, sufficient transmittance gains may not be obtained due to light scattering. On the other hand, if the concentration of HF in the first gas is too low, the depth of the irregularities of the irregularity pattern formed in the surface of the glass sheet may fall below the above-mentioned range. As a result, sufficient transmittance gains may not be obtained.

The first gas may contain not only the HF gas and water vapor but also other gases. For example, the first gas may contain N₂ or the like as a diluent gas.

The HCl gas contact step is a step for enhancing the heat resistance of the surface morphology, that is, the irregularity pattern formed in the HF gas contact step to increase the transmittance of the glass sheet. By bringing the second gas into contact with at least one principal surface of the glass sheet, the heat resistance of the irregularity pattern mentioned above can be enhanced by the action of HCl gas contained in the second gas.

The action of HCl gas in the second gas is described. Presumably, the irregularity pattern formed in the surface of the glass sheet in the HF gas contact step has a weak glass network having many silanol groups (=Si-OH). As the dehydration condensation of a region having this irregularity pattern is promoted by the HCl gas used in the HCl gas contact step, which is performed independently of the HF gas contact step, formation of a rigid SiO₂ network proceeds. As a result, the heat resistance of the irregularity pattern is enhanced. This mechanism is described more specifically. When HF is bought into contact with the surface of the glass sheet, a mode in which the SiO₂ glass network is etched and a mode in which Na⁺ ions in the glass are replaced by H⁺ (or H₃O⁺) ions by ion exchange proceed. Silanol groups (=Si-OH) produced by the contact between the surface of the glass sheet and HF undergo dehydration condensation to form a ≡Si-O-Si≡ network in the surface of the glass sheet. However, all the silanol groups in the surface are not dehydrated and condensed. Therefore, the surface of the glass sheet having been brought into contact only with the first gas has a glass structure having many silanol groups, in other words, a water-rich glass network. HCl gas is considered to have a catalytic effect on dehydration condensation reaction. Therefore, exposure of the surface of the glass sheet to HCl gas promotes dehydration condensation reaction efficiently and rapidly, and thus the heat resistance of the irregularities is enhanced.

The concentration of HCl contained in the second gas is preferably 3 to 30 vol%. The concentration of HCl contained in the second gas is more preferably 8 vol% or less. In order to impart higher heat resistance, the concentration of HCl contained in the second gas is more preferably 4 vol% or more. With the HCl concentration of 4 vol% or more, the glass sheet can maintain its high transmittance even after it is subjected to heat treatment. A substance that is converted into HCl in the course of a reaction, that is, a substance from which HCl is produced as a result of the reaction, also can be used as the HCl contained in the second gas.

The second gas may or may not contain water vapor. The second gas may contain not only the HCl gas and water vapor but also other gases. For example, the second gas may contain N₂ or the like as a diluent gas.

As described above, the HCl gas contact step may be performed before or after the HF gas contact step. For example, even if the HCl gas contact step is performed first to bring the HCl gas in the second gas into contact with the surface of the glass sheet and then the HF gas contact step is performed, the effect of the HCl gas in the second gas applied to the surface of the glass sheet in the HCl gas contact step probably remains after the irregularity pattern is formed in the surface of the glass sheet in the HF gas contact step. Therefore, also in this case, the heat resistance of the irregularity pattern formed in the HF gas contact step can be enhanced by the HCl gas contact step. It should be noted, however, that in the case where the HCl gas contact step is performed before the HF gas contact step, dehydration condensation begins before the irregularity pattern is formed, and thus the irregularity pattern may be less likely to be formed than their formation in the case where the HCl gas contact step is performed after the HF gas contact step. Therefore, it is preferable to perform the HCl gas contact step after the HF gas contact step to obtain higher transmittance gains.

In both the first and second examples of the gas contact step, the glass sheet needs to have a temperature of 450°C or higher when it comes into contact with HF gas and HCl gas. The present inventors have found that when HF gas and HCl gas are brought into contact with the surface of the glass sheet to form the surface morphology that allows the glass sheet to have both high transmittance and high heat resistance, there is an upper limit to the temperature of the glass sheet. More specifically, the present inventors have found that when HF gas and HCl gas are brought into contact with the surface of the glass sheet having a temperature higher than 630°C, the light scattering properties of the glass sheet is enhanced and the haze ratio is increased, and as a result, a high transmittance cannot be obtained. The present inventors believe that the reason for this is as follows.

When HF gas and HCl gas are brought into contact with the surface of a glass sheet having a temperature higher than 630°C, HCl reacts with sodium contained in the glass, so that NaCl crystals are formed locally (Reaction Formula (4) below).

≡Si-O⁻Na⁺ + HO-Si= + HCl → ≡Si-O-Si≡ + NaCl + H₂O (4)

In a region where NaCl is present, the rate of glass etching reaction by HF (Reaction Formula (2) above) is lower than that in a region where NaCl is not present. Thus, the rate of the glass etching reaction by HF varies from place to place on the surface of the glass sheet. The higher the temperature of the glass material is, the higher the rate of the formation of NaCl crystals and the rate of the etching reaction are. Therefore, if the temperature of the glass material is too high, an irregularity pattern including random irregularities with large height differences ranging from about 1 to 3 pm is formed in the surface of the glass material.

However, the present inventors have found it possible to reduce the rate of the formation of NaCl crystals and form fine NaCl crystal by bringing the gases into contact with the glass sheet at a treatment temperature of 630°C or lower and thus possible to form an irregularity pattern with reduced light scattering. More specifically, the present inventors have found it possible to form an irregularity pattern that allows the glass sheet to have a light scattering ratio (i.e., a haze ratio) of 10% or less.

The gas containing HF gas used in the gas contact step (the mixed gas in the first example and the first gas in the second example) may or may not contain water vapor. In the case where the gas containing HF gas contains water vapor, the volume ratio of water vapor to the HF gas (volume of water vapor / volume of HF gas) needs to be less than 8. This is because when the volume of water vapor is 8 or more times that of HF gas, a flat layer without irregularities is formed on the surface of the glass sheet, resulting in a decrease in the transmittance gains and thus poor practicality. Presumably, if the amount of water vapor is 8 or more times that of HF gas when the glass sheet comes into contact with the gas containing HF gas, the progress of the glass etching reaction represented by Reaction Formula (2) above is impeded, and as a result, an irregularity pattern is not formed. The volume ratio of water vapor to HF gas is preferably 5 or less and more preferably 2 or less to obtain higher transmittance gains.

The time of contact between the glass material and the gas is not particularly limited. For example, it is preferably 2 to 8 seconds, and more preferably 3 to 6 seconds. If the time of contact is too long, the depth of the irregularities of an irregularity pattern formed in the surface of the glass sheet may be too large and thus the haze ratio may increase. As a result, sufficient transmittance gains may not be obtained due to light scattering. On the other hand, if the time of contact is too short, the depth of the irregularities of an irregularity pattern formed in the surface of the glass sheet may be too small. As a result, sufficient transmittance gains may not be obtained. For example, in bringing the mixed gas into contact with the surface of the glass sheet at least two separate times, it is recommended to carry out the treatment so that the total time of the treatment falls within the above time range.

The glass sheet having undergone the gas contact step is cooled to obtain a surface-modified glass sheet. The cooling method is not particularly limited, and the cooling method performed in any known glass sheet production method can be used.

The surface-modified glass sheet produced by the production method of the present embodiment has both high transmittance and high heat resistance. Therefore, even if heat treatment is applied to the glass sheet thus produced, its transmittance does not decrease significantly and its high transmittance is maintained.

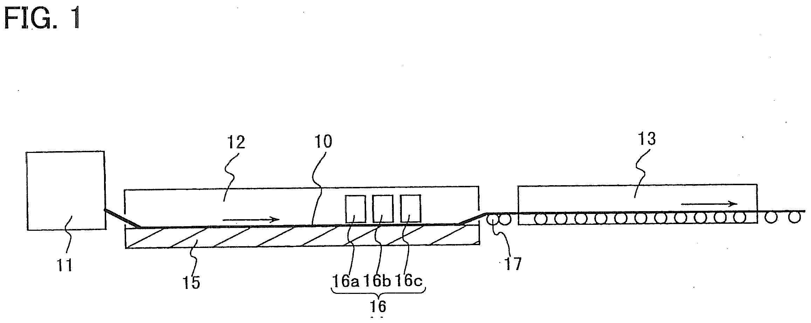

The glass sheet production method of the present embodiment can be applied, for example, to the production of glass sheets by a float process. That is, the gas contact step of the glass sheet production method of the present embodiment may be performed by bringing a gas into contact with at least one principal surface of a glass sheet obtained by forming a glass material into a sheet on a molten metal. This method can be carried out, for example, using a system shown in FIG. 1. An example where the glass sheet production method of the present embodiment is applied to the production of a glass sheet by a float process is described below.

A glass material melted (molten glass) in a float furnace 11 flows from the float furnace 11 into a float bath 12, forms into a semisolid glass ribbon (a sheet-shaped glass material corresponding to a "glass sheet" in the glass sheet production method of the present embodiment) 10 while traveling on molten tin (molten metal) 15, and is then drawn out of the float bath by a roller 17 to be fed into an annealing furnace 13. The glass ribbon solidified in the annealing furnace 13 is cut into glass sheets having a predetermined size by a cutting device which is not shown.

A predetermined number of spray guns 16 (three spray guns 16a, 16b, and 16c in the system shown in the figure) are disposed in the float bath 12 at a predetermined distance from the surface of the high-temperature glass ribbon 10 on the molten tin 15. The gas (the mixed gas containing HF gas and HCl gas, the first gas containing HF gas, or the second gas containing HCl gas) is continuously supplied onto the glass ribbon 10 from at least one of the spray guns 16a to 16c. The temperature of the glass ribbon 10 passing near the spray guns 16a to 16c while moving on the molten tin 15 is set within a range of 450°C to 630°C.

In the system shown in FIG. 1, the step of cooling the glass sheet is carried out in the annealing furnace 13.

As the glass sheet, any known glass material can be used as long as it has a glass composition that can be used in the float process. For example, common soda-lime glass, aluminosilicate glass, or the like can be used, and such glass typically contains sodium as a component. For example, common clear glass or low iron glass can be used. The thickness of the sheet-shaped glass material to be formed is not particularly limited because it is determined as appropriate depending on the thickness of a glass sheet to be produced. The thickness of the finally obtained glass sheet is not particularly limited, and can be 0.3 to 25 mm, for example.

In the present embodiment, the spray guns 16 are disposed at a predetermined distance from the surface of the high-temperature glass ribbon 10 on the molten tin 15. However, the spray guns 16 may be disposed in the annealing furnace 13. This means that the gas contact step of bringing the gas into contact with the surface of the glass sheet can also be performed in the annealing step.

According to the production method of the present embodiment, it is possible to produce a high transmittance glass sheet having improved heat resistance only by performing a very simple operation of bringing specific gases into contact with the surface of a glass sheet. In addition, it is also possible to perform the production method of the present embodiment using a production line for the float process, which is a continuous glass sheet production method. Thus, according to the production method of the present invention, it is possible to provide a high transmittance glass sheet having improved heat resistance in a more simple way than in conventional methods, without a significant decrease in production efficiency but with a minimal increase in production cost.

### (Second Embodiment)

An embodiment of the glass sheet of the present disclosure is described. The glass sheet of the second embodiment has an irregularity pattern in at least one principal surface thereof. This irregularity pattern is formed by bringing HF gas into contact with at least one principal surface of a glass sheet having a temperature in a range of 450°C to 630°C. Since the dimensions such as the depth of the irregularities included in the irregularity pattern are the same as the irregularities described in the first embodiment, the detailed description of the irregularity pattern is omitted here. When the glass sheet of the second embodiment is heated for 220 seconds to increase the temperature of the principal surface of the glass sheet from room temperature to a temperature 92°C higher than the glass transition temperature of the glass sheet and immediately thereafter the glass sheet is naturally cooled at room temperature, the average value of transmittance gains for 380- to 1100-nm wavelength light of the glass sheet of the second embodiment is greater than 0. That is, the glass sheet of the second embodiment is a glass sheet having a high transmittance derived from an irregularity pattern formed in its surface and having improved heat resistance enough to maintain this high transmittance even after heat treatment. In the second embodiment, a transmittance gain is a value obtained by subtracting, from a measured value of the transmittance of the glass sheet of the second embodiment, a measured value of the transmittance of a glass sheet (reference glass sheet) that has the same thickness and the same composition but does not have an irregularity pattern in its principal surface. The transmittance gain is calculated for every 1-nm wavelength interval. The average value of transmittance gains is a value obtained by determining the values of transmittance gains at the corresponding wavelengths in the wavelength range (the wavelength range of 380 to 1100 nm in the second embodiment) for which the average value is to be calculated, and then by performing simple averaging of the determined values.

When a conventional glass sheet, which has an irregularity pattern that is formed in its surface by bringing a fluorine atom-containing substance such as HF into contact with the surface so as to achieve a high transmittance by the irregularity pattern, is exposed to high temperatures by heat treatment or the like after the irregularity pattern is formed, the irregularity pattern is not maintained and the transmittance decreases significantly. In contrast, the glass sheet of the second embodiment also has an irregularity pattern that is formed by contact with HF gas but has high heat resistance as described above. Therefore, the glass sheet of the second embodiment can be used as a heat treatment glass sheet to be subjected to heat treatment and thus has a wide range of applications.

The heat treatment used herein may be a heat treatment for thermal tempering, for example.

If the haze ratio of a glass sheet is too high, it is difficult to obtain a high transmittance. Therefore, the haze ratio of the glass sheet of the second embodiment is desirably less than 10%.

The glass sheet of the second embodiment can be produced by, for example, the production method of the first embodiment.

The glass sheet of the second embodiment has a variety of applications. For example, the glass sheet of the second embodiment can be used in applications such as glass sheets for solar cells, glass sheets for show windows, low-friction glass sheets, and fingerprint-resistant glass sheets. For example, in the case where the glass sheet of the second embodiment is used as a glass sheet for solar cells or a glass sheet for show windows which is required to have a high transmittance for sunlight, the glass sheet is produced so that the average value of transmittance gains for 400- to 800-nm wavelength light is 1.0% or more. That is, the glass sheet of the second embodiment is produced so that the transmittance for 400- to 800-nm wavelength light is at least 1.0% higher than that of a reference glass sheet that has the same thickness and the same composition as the glass sheet of the second embodiment but does not have an irregularity pattern in its principal surface. In the case where the glass sheet of the second embodiment is used as a low-friction glass sheet or a fingerprint-resistant glass sheet, such as a glass substrate for touch panels, which is required to have low-friction properties or fingerprint resistance, the glass sheet of the second embodiment is produced so that the irregularity pattern provided in its principal surface includes irregularities with a depth of 20 to 200 nm.

### EXAMPLES

Hereinafter, the present invention will be described in more detail using examples. However, the present invention is not limited to the examples given below, and other examples are possible as long as they do not depart from the gist of the present invention.

### [Method for producing glass sheet]

### (Examples 1 to 8)

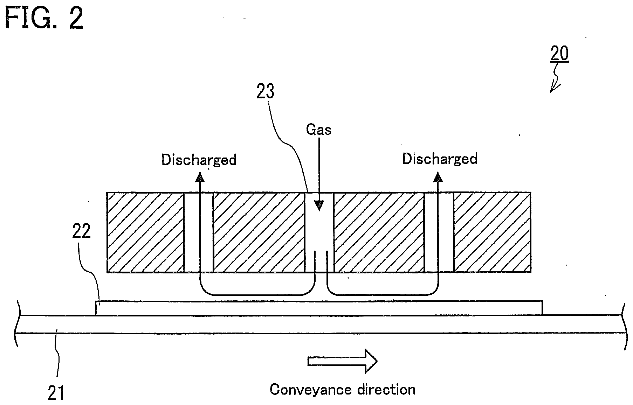

Glass sheets having a thickness of 3 mm were produced by a float process. First, a glass material was prepared so as to have the following main composition of glass: 70.8% of SiO₂, 1.0% of Al₂O₃, 8.5% of CaO, 5.9% of MgO, and 13.2% of Na₂O, where "%" means "mass%". The glass material was melted, the molten glass material was formed into a glass ribbon on molten tin in a float bath. The Tg of this glass material was 558°C. In these Examples, a gas (mixed gas containing HF gas and HCl gas) was blown onto one principal surface of each 3-mm-thick glass sheet obtained by cutting the glass ribbon, using a production line different from the glass sheet production line. That is, in these Examples, the blowing of the gas was performed off-line. An apparatus 20 as shown in FIG. 2, including a conveyer mechanism 21 for conveying glass sheets and a spray gun 23 capable of blowing the gas onto the surface of a conveyed glass sheet 22, was used to blow the gas in these Examples. The apparatus 20 was also equipped with a heating mechanism (not shown) capable of heating the conveyed glass sheet 22. The gas heated to 180°C was brought into contact with the glass sheet 22 heated to a predetermined temperature (in a range of 450°C to 630°C) for a predetermined time. Table 1 shows the treatment conditions (including the components of the gas blown), the volume ratio of water vapor to HF gas (H₂O/HF), the temperature of the glass sheet in contact with the gas, and the time of contact with the gas in each Example. N₂ gas was used to dilute the blown gas. That is, the remainder of the gas except for the components shown in Table 1 was only N₂ gas. 99.99% HCl gas was used as the HCl gas. The HF gas was obtained by evaporating a 55 mass% aqueous HF solution.

### (Examples 9 to 11) not according to the present invention

The gases were blown onto glass sheets produced in the same manner as in Examples 1 to 8 using the same apparatus 20. In Examples 9 to 11, however, a mixed gas containing HF gas and HCl gas was not used. Instead, HF gas and HCl gas were blown onto the surface of each glass sheet separately. That is, a first gas containing HF gas but not containing HCl gas and a second gas containing HCl gas but not containing HF gas were blown onto each glass sheet separately. In Examples 9 and 10, the first gas and the second gas were blown in this order. In Example 11, the second gas and the first gas were blown in this order. Table 1 shows the treatment conditions (including the components of the blown gases), the volume ratio of water vapor to HF gas (H₂O/HF), the temperature of the glass sheet in contact with the gases, and the time of contact with the gases in each of Examples 9 to 11. N₂ gas was used to dilute the blown gases. That is, the remainder of the gas except for the components shown in Table 1 was only N₂ gas. 99.99% HCl gas was used as the HCl gas. The HF gas was obtained by evaporating a 55 mass% aqueous HF solution.

### (Comparative Examples 1 to 11)

The gas was blown onto glass sheets produced in the same manner as in Examples 1 to 8 using the same apparatus 20. The gas was blown in the same manner as in Examples 1 to 8. Table 1 shows the treatment conditions (including the components of the blown gas), the volume ratio of water vapor to HF gas (H₂O/HF), the temperature of the glass sheet in contact with the gas, and the time of contact with the gas in each Comparative Example. N₂ gas was used to dilute the blown gas. That is, the remainder of the gas except for the components shown in Table 1 was only N₂ gas. 99.99% HCl gas was used as the HCl gas. The HF gas was obtained by evaporating a 55 mass% aqueous HF solution.

### [Evaluation method]

### (Average values of transmittance gains before and after heat treatment)

The surface-modified glass sheets of Examples 1 to 11 and Comparative Examples 1 to 11 were subjected to heat treatment, and the average values of transmittance gains before the heat treatment and the average value of transmittance gains after the heat treatment were determined. The method of subjecting the glass sheets to the heat treatment and the method of determining the average values of transmittance gains were as follows.

First, the heat treatment is described. Ten samples of 50 mm × 50 mm obtained by cutting each glass sheet were placed in an electric furnace whose temperature could be set at an ambient temperature of 760°C. The surface temperature of the glass sheet samples rose immediately after they were placed in the furnace. Each glass sheet sample was heated for 220 seconds to increase its surface temperature from room temperature to 650°C (i.e., a temperature 92°C higher than the glass transition temperature (558°C) of the glass sheet) and immediately thereafter the glass sheet sample was naturally cooled at room temperature. The temperature 92°C higher than the glass transition temperature is a temperature determined for thermal tempering.

Next, the method of determining the average values of transmittance gains is described. For the glass sheets of Examples 1 to 11 and Comparative Examples 1 to 11, the average values of transmittance gains for 380- to 1100-nm wavelength light were determined. First, in order to determine the transmittance gains, the transmittance of each glass sheet before blowing of the gas (before contact with the gas), the transmittance of the glass sheet after blowing of the gas but before heat treatment (after contact with the gas), and the transmittance of the glass sheet after the heat treatment were each measured in the wavelength range of 380 to 1100 nm for every 1-nm wavelength interval using a spectrophotometer, U4100 manufactured by Hitachi High-Technologies Corporation. For each measurement wavelength, a transmittance gain before the heat treatment was calculated by subtracting the transmittance of the glass sheet before contact with the gas from the transmittance of the glass sheet after contact with the gas. This was followed by simple averaging of the transmittance gains in the wavelength range of 380 to 1100 nm to determine the average value of the transmittance gains before the heat treatment. For each measurement wavelength, a transmittance gain after the heat treatment was calculated by subtracting the transmittance of the glass sheet before contact with the gas from the transmittance of the glass sheet after the heat treatment. This was followed by simple averaging of the transmittance gains in the wavelength range of 380 to 1100 nm to determine the average value of the transmittance gains after the heat treatment. Table 1 shows the results. In these Examples and Comparative Examples, the transmittance of each glass sheet before contact with the gas is equal to the transmittance of a glass sheet on which an irregularity pattern is not formed by contact with the gas, that is, the transmittance of a reference glass sheet described in the second embodiment.

### (Haze ratio before heat treatment)

For each of the glass sheets of Examples 1 to 11 and Comparative Examples 1 to 11, the haze ratio was measured using "Haze-Guard Plus" manufactured by BYK Gardner and Illuminant C after the blowing of the gas and before the heat treatment. Table 1 shows the results.

**[Table 1]**

| | Treatment conditions | H₂O/HF | Time of contact with gases (sec) | Temperature of glass sheet (°C) | Haze ratio (%) | Average value of transmittance gains (%) (wavelengths: 380 to 1100 nm) | |
|---|---|---|---|---|---|---|---|
| | | | | | Before heat treatment | Before heat treatment | After heat treatment |
| Ex. 1 | 4%HF+3.6%H₂O+1%HCl | 0.9 | 3 | 450 | 0.1 | 0.8 | 0.5 |
| Ex. 2 | 4%HF+3.6%H₂O+1%HCl | 0.9 | 3 | 500 | 0.8 | 1.5 | 1.2 |
| Ex. 3 | 4%HF+3.6%H₂O+1%HCl | 0.9 | 3 | 550 | 1.4 | 1.9 | 1.6 |
| Ex. 4 | 4%HF+3.6%H₂O+1%HCl | 0.9 | 3 | 600 | 1.5 | 2.1 | 1.9 |
| Ex. 5 | 4%HF+3.6%H₂O+1%HCl | 0.9 | 3 | 630 | 4.9 | 1.0 | 0.6 |
| Ex. 6 | 4%HF+3.6%H₂O+0.25%HCl | 0.9 | 3 | 600 | 0.4 | 2.5 | 0.6 |
| Ex. 7 | 4%HF+3.6%H₂O+4%HCl | 0.9 | 3 | 600 | 0.1 | 1.9 | 0.8 |
| Ex. 8 | 4%HF+3.6%H₂O+1%HCl | 0.9 | 6 | 630 | 9.7 | 1.6 | 1.2 |
| Ex. 9 | 4%HF-3.6%H₂O→4%HCl | 0.9 | 3.4→3.4 | 630 | 0.5 | 2.8 | 1.9 |
| Ex. 10 | 4%HF·3.6%H₂O→4%HCl | 0.9 | 3.4→3.4 | 600 | 0.9 | 2.0 | 1.8 |
| Ex. 11 | 4%HCl→4%HF·3.6%H₂O | 0.9 | 3.4→3.4 | 630 | 0.7 | 2.5 | 1.5 |
| Com. Ex. 1 | 4%HF+3.6%H₂O+1%HCl | 0.9 | 3 | 400 | 0.2 | 0.2 | 0.0 |
| Com. Ex. 2 | 4%HF+3.6%H₂O+1%HCl | 0.9 | 3 | 660 | 16.2 | -1.2 | -1.8 |
| Com. Ex. 3 | 4%HF+3.6%H₂O | 0.9 | 3 | 400 | 0.2 | 0.0 | -0.1 |
| Com. Ex. 4 | 4%HF+3.6%H₂O | 0.9 | 3 | 450 | 0.1 | 0.7 | 0.0 |
| Com. Ex. 5 | 4%HF+3.6%H₂O | 0.9 | 3 | 500 | 0.2 | 0.7 | 0.0 |
| Com. Ex. 6 | 4%HF+3.6%H₂O | 0.9 | 3 | 550 | 0.3 | 1.9 | -0.1 |
| Com. Ex. 7 | 4%HF+3.6%H₂O | 0.9 | 3 | 600 | 0.1 | 2.5 | 0.0 |
| Com. Ex. 8 | 4%HF+3.6%H₂O | 0.9 | 3 | 630 | 0.2 | 2.2 | 0.0 |
| Com. Ex. 9 | 4%HF+3.6%H₂O | 0.9 | 3 | 660 | 0.4 | 2.1 | -0.1 |
| Com. Ex. 10 | 4%HF+60%H₂O+1%HCl | 15 | 3 | 630 | 0.0 | 0.6 | 0.0 |
| Com. Ex. 11 | 4%HCl | - | 3.4 | 630 | 0.2 | 0.1 | 0.0 |

The glass sheets produced by the production methods of Examples 1 to 11 that met all the requirements of the production method of the present invention exhibited high transmittance gains even after the heat treatment. This means that the glass sheets produced by the production methods of Examples 1 to 11 were glass sheets having both high heat resistance and high transmittances.

On the other hand, for the glass sheets produced by the production methods of Comparative Examples 1 to 11 that did not meet the requirements of the production method of the present invention, their transmittance gains after the heat treatment were 0 or less. This means that the heat resistance of the glass sheets produced by the production methods of Comparative Examples 1 to 11 was too low to maintain their high transmittances after the heat treatment.

A more detailed analysis of the results of Examples and Comparative Examples is given below.

Examples 1 to 5 and Comparative Examples 1 and 2 were carried out under the same conditions except for the temperatures of glass sheets. The result of Example 1 in which the temperature of the glass sheet was 450°C was compared with the result of Comparative Example 1 in which the temperature of the glass sheet was 400°C. Due to a decrease in the temperature of the glass sheet, the average value of transmittance gains before the heat treatment decreased from 0.8% to 0.2% and the average value of transmittance gains after the heat treatment decreased from 0.5% to 0.0%, although the haze ratio remained nearly unchanged. Presumably, this is because the temperature of the glass sheet in contact with the gas was too low to form an irregularity pattern for obtaining a high transmittance in the surface of the glass sheet. The result of Example 5 in which the temperature of the glass sheet was 630°C was compared with the result of Comparative Example 2 in which the temperature of the glass sheet was 660°C. Due to an increase in the temperature of the glass sheet, the haze ratio increased from 4.9% to 16.2%, the average value of transmittance gains before the heat treatment decreased from 1.0% to -1.2%, and the average value of transmittance gains after the heat treatment decreased from 0.6% to -1.8%. Presumably, this is because the haze ratio increased due to an increase in the temperature of the glass sheet and thus a decrease in the transmittance due to light scattering increased accordingly.

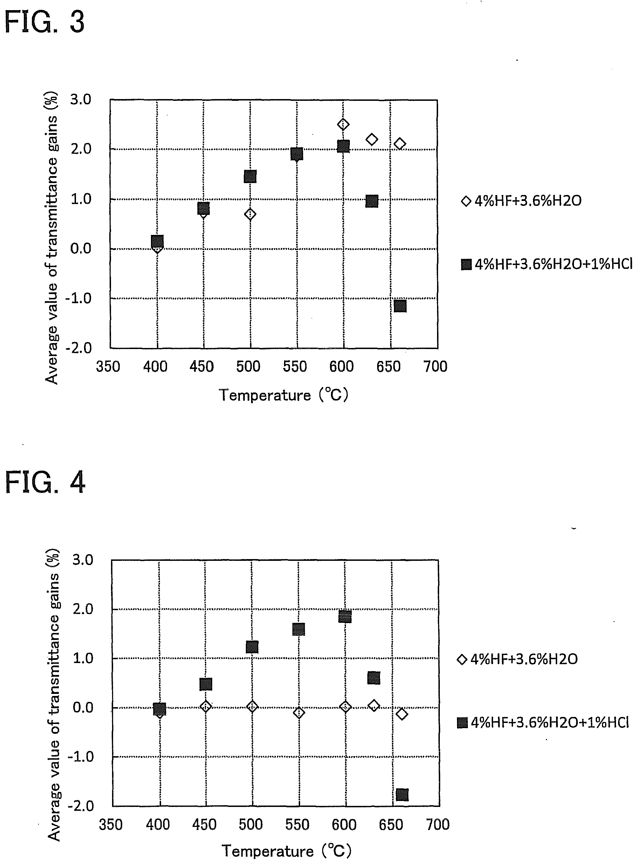

The glass sheets of Examples 1 to 5 and Comparative Examples 1 and 2 were compared with the glass sheets of Comparative Examples 3 to 9. These glass sheets were obtained from glass sheets having the same temperatures at the blowing of the gas. The gases used in Examples 1 to 5 and Comparative Examples 1 and 2 were the same as the gases used in Comparative Examples 3 to 9 except for the presence or absence of HCl in the gases. After the heat treatment, the average values of transmittance gains of the glass sheets having had contact with both HF gas and HCl gas were higher than those of the glass sheets having had contact with a gas not containing HCl gas. FIG. 3 and FIG. 4 each show the relationship between the average values of transmittance gains and the differences in the temperatures of glass sheets at the blowing of the gases and the presence or absence of HCl in the blown gases (FIG. 3 shows the relationship before the heat treatment and FIG. 4 shows the relationship after the heat treatment). As shown in FIG. 3, the glass sheets each obtained from a glass sheet having a temperature of 450°C to 630°C at the blowing of the gas had an average value of transmittance gains of 0.5% or more before the heat treatment, regardless of whether the gas did or did not contain HCl. However, as shown in FIG. 4, after the heat treatment at a temperature determined for thermal tempering, the average value of transmittance gains of the glass sheets each obtained from a glass sheet having a temperature of 450°C to 630°C at the blowing of the gas decreased to 0% or less when the blown gas did not contain HCl gas. In contrast, when the blown gas contained both HF gas and HCl gas, the average values of transmittance gains of the resulting glass sheets were maintained at values higher than 0%.

For the glass sheet of Comparative Example 11 obtained by being blown with a gas not containing HF gas, the average value of transmittance gains was low even before the heat treatment, although the glass sheet was obtained from a glass sheet having a temperature of 630°C at the blowing of the gas. Presumably, this is because an irregularity pattern was not formed in the glass surface due to the lack of HF gas and thus the low reflection effect of the irregularity pattern could not be provided to the glass sheet, and as a result, high transmittance gains could not be obtained.

Example 5 and Comparative Example 10 were carried out under the same conditions except for the amounts of H₂O in the gases. Example 5 was compared with Comparative Example 10. Due to an increase in the amount of H₂O in the gas, the haze ratio decreased from 4.9% to 0.2%, the average value of transmittance gains before the heat treatment decreased from 1.0% to 0.6%, and the average value of transmittance gains after the heat treatment decreased from 0.6% to 0.0%. This is because the ratio of the content of H₂O to that of HF in the gas is high, the glass etching reaction by HF is inhibited. As a result, an irregularity pattern is not formed in the surface of the glass and a flat layer is formed instead. Without the irregularity pattern formed in the surface of the glass, the low reflection effect of the irregularity pattern cannot be obtained and thus high transmittance gains cannot be obtained. In Comparative Example 10, the volume ratio of H₂O to HF is 15. The present inventors have confirmed that the upper limit of the volume ratio threshold is 8, and therefore the formation of the irregularity pattern slowly begins to occur at a volume ratio of less than 8 and is accelerated at a volume ratio of 5 or less.

Examples 1 to 5 carried out under the same conditions except for the temperatures of glass sheets were compared with each other. As a result, it was confirmed that the haze ratio increased as the temperature of the glass sheet increased. This is because the rate of the formation of NaCl crystals and the rate of the etching reaction increase as the temperature of the glass sheet increases, and thus larger irregularities are formed in the surface of the glass sheet.

In Example 6 where a mixed gas containing HCl at a concentration of 0.25 vol% was used, the average value of transmittance gains after heat treatment was 0.6%, which indicated an improvement in the heat resistance. Examples 4, 6, and 7 were compared with each other. As a result, the average value of transmittance gains before heat treatment decreased as the concentration of HCl increased. However, the average values of transmittance gains after heat treatment were all 0.6% or more in these Examples, which means that both high light transmittance and high heat resistance were achieved.

### INDUSTRIAL APPLICABILITY

According to the present invention, a high light transmittance glass sheet having improved heat resistance can be obtained. Therefore, the glass sheet of the present disclosure is suitable for use as a cover glass plate for solar cells which is required to use sunlight with high efficiency, a low-E glass product having improved transmittance, and even a glass for displays. The glass sheet of the present disclosure is also suitable for use as a heat treatment glass sheet to be subjected to heat treatment for thermal tempering, for example. In addition, since the glass sheet of the present disclosure has reduced reflectance, it is also expected to be used in applications such as anti-reflection (or anti-glare) windshields, show windows, and displays.

## Claims

1. A method for producing a surface-modified glass sheet, comprising a gas contact step of bringing hydrogen fluoride (HF) gas and hydrogen chloride (HCl) gas into contact with at least one principal surface of a glass sheet having a temperature in a range of 450°C to 630°C, wherein
a gas containing the hydrogen fluoride (HF) gas is used in the gas contact step, and in the gas containing the hydrogen fluoride (HF) gas, a volume ratio of water vapor to the hydrogen fluoride (HF) gas (volume of water vapor / volume of HF gas) is less than 8, and wherein in the gas contact step, a mixed gas containing hydrogen fluoride (HF) gas and hydrogen chloride (HCl) gas is brought into contact with the at least one principal surface of the glass sheet.

2. The method for producing a surface-modified glass sheet according to claim 1, wherein the glass sheet is subjected to heat treatment, and the heat treatment is a heat treatment for thermal tempering.

## Patentansprüche

1. Verfahren zur Herstellung einer oberflächenmodifizierten Glasscheibe, umfassend einen Gaskontaktschritt des Inkontaktbringens von Fluorwasserstoffgas (HF-Gas) und Chlorwasserstoffgas (HCl-Gas) mit wenigstens einer Hauptoberfläche einer Glasscheibe, die eine Temperatur in einem Bereich von 450°C bis 630°C aufweist, wobei
ein Gas, das das Fluorwasserstoffgas (HF-Gas) enthält, in dem Gaskontaktschritt verwendet wird, und in dem Gas, das das Fluorwasserstoffgas (HF-Gas) enthält, ein Volumenverhältnis von Wasserdampf zu dem Fluorwasserstoffgas (HF-Gas) (Volumen des Wasserdampfes / Volumen des HF-Gases) weniger als acht beträgt, und wobei in dem Gaskontaktschritt ein Mischgas, das Fluorwasserstoffgas (HF-Gas) und Chlorwasserstoffgas (HCl-Gas) enthält, mit wenigstens einer Hauptoberfläche der Glasscheibe in Kontakt gebracht wird.

2. Verfahren zur Herstellung einer oberflächenmodifizierten Glasscheibe nach Anspruch 1, wobei die Glasscheibe einer Wärmebehandlung unterzogen wird, und die Wärmebehandlung eine Wärmebehandlung zum thermischen Vorspannen ist.

## Revendications

1. Procédé de production d'une plaque de verre modifiée en surface, comprenant une étape de mise en contact de gaz mettant du gaz de fluorure d'hydrogène (HF) et du gaz de chlorure d'hydrogène (HCl) en contact avec au moins une surface principale d'une plaque de verre ayant une température dans un intervalle de 450°C à 630°C, dans lequel
un gaz contenant le gaz de fluorure d'hydrogène (HF) est utilisé dans l'étape de mise en contact de gaz, et dans le gaz contenant le gaz de fluorure d'hydrogène (HF), un rapport de volume de vapeur d'eau au gaz de fluorure d'hydrogène (HF) (volume de vapeur d'eau/volume de gaz de HF) est inférieur à 8, et dans lequel dans l'étape de mise en contact de gaz, un gaz mixte contenant du gaz de fluorure d'hydrogène (HF) et du gaz de chlorure d'hydrogène (HCl) est mis en contact avec la au moins une surface principale de la plaque de verre.

2. Procédé de production d'une plaque de verre modifiée en surface selon la revendication 1, dans lequel la plaque de verre est soumise à un traitement thermique, et le traitement thermique est traitement thermique pour trempe thermique.
